# EUROPÄISCHE PATENTSCHRIFT

(11) **EP 4 240 899 B1**
(45) Veröffentlichungstag und Bekanntmachung des Hinweises auf die Patenterteilung: **11.12.2024**
(21) Anmeldenummer: 21798972.2
(22) Anmeldetag: 20.10.2021
(51) Int. Cl.: D21F 7/00, D21G 7/00

(54) **VORRICHTUNG UND VERFAHREN ZUM BEFEUCHTEN EINER MATERIALBAHN**
DEVICE AND METHOD FOR DAMPENING A MATERIAL WEB
DISPOSITIF ET PROCÉDÉ D'HUMECTAGE D'UNE BANDE DE MATÉRIAU

(30) Priorität: 05.11.2020 DE 102020129160
(43) Veröffentlichungstag der Anmeldung: 13.09.2023
(73) Patentinhaber: Voith Patent GmbH, 89522 Heidenheim (DE)
(72) Erfinder: HAUX, Andreas, 89518 Heidenheim (DE); WEGEHAUPT, Frank, 89522 Heidenheim (DE); SPINDLER, Jörg, 73529 Schäbisch Gmünd (DE)
(74) Vertreter: Voith Patent GmbH - Patentabteilung
(86) Internationale Anmeldenummer: PCT/EP2021/079069
(87) Internationale Veröffentlichungsnummer: WO 2022/096266

(56) Entgegenhaltungen:
- EP-A2- 1 088 594
- DE-A1- 10 359 112
- DE-A1- 4 233 992

## Beschreibung

Die Erfindung betrifft ein Verfahren zur Regelung und/oder Steuerung mindestens einer Befeuchtungsvorrichtung, umfassend ein Ventil mit mindestens einem elektromagnetischen Kraftgeber sowie einem Rückstellkraftgeber, einen Ventilkörper, eine Steuerungseinheit, sowie eine Auftragsdüse, geeignet zur Befeuchtung einer Materialbahn, insbesondere einer Papier- Karton- oder Faserstoffbahn.

Zudem betrifft die Erfindung eine Befeuchtungsvorrichtung und die Verwendung einer Befeuchtungsvorrichtung zur definierten Befeuchtung einer Papier-, Karton-, Tissue- oder einer anderen Materialbahn in einer Maschine zur Herstellung und/oder Veredlung derselben.

Die Befeuchtung der Materialbahn erfolgt zur Einstellung des definierten Endtrockengehaltes oder zur Veränderung von Qualitätseigenschaften wie der Formstabilität ("Curl"). Die Materialbahn kann auch befeuchtet werden, um lokale Feuchteunterschiede auszugleichen, insbesondere durch eine Vielzahl von Befeuchtungsvorrichtungen, die über die Breite der Materialbahn verteilt angeordnet sind kann eine Vergleichmäßigung der Feuchte über die Breite der Papierbahn erreicht werden. Für die Regelung der Feuchte über die Breite der Materialbahn werden in der Literatur auch die Begriffe "Profilierung" oder "Querprofilierung" verwendet wie beispielsweise in DE 102007025611 A1.

Weiterhin ist aus dem Stand der Technik eine Befeuchtungsvorrichtung aus der DE 42 33 992 A1 bekannt.

Die Befeuchtung erfolgt dabei über Düsen, die ein Auftragsmedium wie Wasser oder ein Wasser/Dampf Gemisch auf die Papierbahn aufbringen. Das Wasser kann dabei verschiedene Qualitäten umfassen, z.B. Frischwasser, Kondensat, Klarfiltrat oder ein Prozesswasser höherer Qualität. Da über das Auftragsmedium auch Schmutz, Feststoffe oder Fasern in die Düse und den Ventilkörper gelangen können, gibt es hier häufig Probleme einen gleichmäßigen Betrieb und eine präzise Regelung der Befeuchtungsvorrichtung sicherzustellen.

Besondere Aufmerksamkeit liegt daher im Stand der Technik auf dem Regelungsventil und den Auftragsdüsen. EP1088594B1 beschreibt die Regelung der Auftragsmenge über ein Pulsationsventil. Das Pulsationsventil wird dabei binär über eine Pulsation gesteuert, das bedeutet lediglich in den Zuständen offen und geschlossen betrieben. Das bedeutet die Auftragsmenge wird über die zeitliche Abfolge von offenen und geschlossenen Ventilzuständen mittels Pulsationen geregelt. Im Folgenden werden die Pulsationen dann durch ein Dämpfungselement ausgeglichen, um so einen gleichmäßigen Volumenstrom des Auftragsmediums zu erhalten.

Vorteil von Pulsationsventilen ist, dass die Bewegung den Ventilkörper an einen Anschlag fährt, was typischerweise mit hoher Geschwindigkeit und Kraft ausgeführt werden kann. Dadurch ist ein Festsetzen des Ventils, besonders durch Ablagerungen oder Verschmutzungen sehr selten. Auch werden Pulsationsventile meist regelmäßig und schnell bewegt.

Der Nachteil der Pulsationsventile, auch getaktete Ventile genannt, ist bislang der zusätzliche Aufwand, um die resultierenden Schwankungen der Auftragsmenge auszugleichen. Dies kann durch nachgeschaltete Dämpfungselemente geschehen, oder durch den Einsatz einer Vielzahl von Ventilen, die entsprechend in einer Parallelanordnung oder Reihenschaltung angeordnet sind und so einen Ausgeglichenen Volumenstrom erreichen.

Proportionalventile werden bei den geringen Auftragsmengen für die Bahnbefeuchtung und bei den konstanten Fahrweisen aufgrund der Neigung zum Festsetzen durch Ablagerungen oder Verschmutzungen bislang im Stand der Technik nicht für die Befeuchtung von Materialbahnen verwendet. Zudem sind herkömmliche Proportionalventile oft nicht in der Lage die geforderte schnelle Regelung der Befeuchtungsmenge sicherzustellen. Bei einer langsamen Regelung können in der Materialbahn lokal falsche Feuchtewerte entstehen, die sich nicht mehr zeitlich ausgleichen und zu Qualitätsproblemen in der Bahn führen.

Die Aufgabe der Erfindung ist es, die Vorteile von Proportionalventilen zur genauen Regelung der Auftragsmenge zur Befeuchtung einer Materialbahn mit den Vorteilen von schnellen Pulsationsventilen zu kombinieren die genannten Nachteile erfindungsgemäß zu vermindern.

Die Aufgabe wird erfindungsgemäß durch ein Verfahren entsprechend dem unabhängigen Anspruch gelöst und durch eine Vorrichtung bzw. die Verwendung einer Vorrichtung entsprechend den Unteransprüchen. Weitere vorteilhafte Ausführungsformen der vorliegenden Erfindung finden sich in den Unteransprüchen.

Erfindungsgemäß wird die Aufgabe durch ein Verfahren gelöst, wobei die Befeuchtungsvorrichtung einen Reinigungszyklus durchführen kann, wobei das Ventil als Proportionalventil ausgeführt ist, wobei das Proportionalventil um den eingestellten Zielwert pulsiert, wobei die Abweichung von dem eingestellten Zielwert mittels einer Taktung so erfolgt, dass eine positive und/oder eine negative Abweichung zu dem Zielwert erfolgt.

Die kurzzeitige Pulsation in dem Reinigungszyklus hat dabei die Vorteilhafte Wirkung, dass Ablagerungen und Verschmutzungen, die an Ventilkörper oder Auftragsdüse anhaften können, gelöst werden und eine Verstopfung der Auftragsdüse vermieden wird. Die Auftragsdüse kann dabei auch als Auftragsöffnung ausgeführt sein. Weiterhin können Auftragsdüsen oder Auftragsöffnung auch einen Keramikeinsatz umfassen, um Verschleiß und/oder Verschmutzung zusätzlich zu minimieren.

Vorteilhaft ist mindestens eine Befeuchtungsvorrichtung, umfassend ein Ventil mit mindestens einem elektromagnetischen Kraftgeber sowie einem Rückstellkraftgeber, einen Ventilkörper und eine Steuerungseinheit sowie eine Auftragsdüse oder Auftragsöffnung, geeignet zur Befeuchtung einer Materialbahn, insbesondere einer Papier-, Karton- oder Faserstoffbahn, wobei das Ventil ein Proportionalventil ist und einen Regelbereich aufweist, der in mindestens 25 Schritten, vorzugsweise mindestens 100 Schritten, auf einen Zielwert eingestellt werden kann.

Das Proportionalventil unterscheidet sich dabei von einem Pulsationsventil durch die Möglichkeit verschiedene Zielwerte im Bereich zwischen dem geschlossenen und dem geöffneten Zustand des Ventilkörpers zuzulassen. Im Vergleich dazu ermöglicht ein Pulsationsventil lediglich die beiden Zustände offen und geschlossen. Der Zielwert bezieht sich dabei auf einen variablen definierten Volumenstrom, der bei einer Teilöffnung durch das Ventil gelangen kann. Da Ventilöffnung und Durchflussmenge bzw. Volumenstrom direkt abhängige Größen sind, ist es unerheblich, ob der Zielwert als Ventilstellung, oder Auftragsmenge definiert wird.

Durch eine Veränderung der Kraft, die auf den Ventilkörper durch den elektromagnetischen Kraftgeber ausgeübt werden kann, kann hier der gewünschte Zielwert eingestellt werden.

Die Steuerungseinheit für die Befeuchtungsvorrichtung kann dabei eine Vorgabe oder ein Signal zur Änderung der Ventilstellung entgegennehmen Beispielsweise als elektrisches Signal aus einer übergeordneten Steuerung, Prozessregelung, Regelung oder als direkte manuelle Nutzereingabe. Entsprechend der Vorgabe kann dann mit der Steuerungseinheit der elektrische Strom oder die elektrische Spannung für den Elektromagnetischen Kraftgeber so verändert werden, dass der gewünschte Zielwert einstellt werden kann. Um eine schnelle Regelung zu erreichen, arbeitet die Steuerungseinheit mit einer hohen Arbeitsfrequenz, bei der Signale verarbeitet und verändert werden können. Dies geschieht typischerweise mit einer Arbeitsfrequenz größer 100 Hz, vorzugsweise größer 1 kHz, und insbesondere größer 1 Mhz.

Weiterhin vorteilhaft ist die Befeuchtungsvorrichtung nach einem Anspruch, wenn das Proportionalventil einen Ventilkörper aufweist, wobei der Ventilkörper von Geschlossen bis Offen einen Weg von weniger als 5 mm durchläuft, vorzugsweise weniger als 2 mm.

Der beschriebene Weg ist dabei die Regelstrecke, die der Ventilkörper durchlaufen kann, wobei der durch das Ventil gelangende Volumenstrom entsprechend proportional zur Regelstrecke verändert wird. Eine geringe Regelstrecke ist hier vorteilhaft, da so nur ein kurzer Weg zwischen verschiedenen Zielwerten zurückgelegt werden muss. Daher ermöglicht der kurze Weg ein entsprechend schnelles Reagieren des Ventils. In Laborversuchen sind hier Ventile mit einem Weg von weniger als 2 mm und sogar mit einem Weg von weniger als 1 mm getestet worden. Wichtig ist hier, dass weiterhin eine hohe Auflösung von Zwischenschritten möglich bleibt, um eine genaue Regelung der Auftragsmenge zu ermöglichen.

Weiterhin vorteilhaft ist eine Befeuchtungsvorrichtung einem der Ansprüche wobei der oder die elektromagnetischen Kraftgeber geeignet ist das Proportionalventil aus jedem Zielwert in einer Zeit kleiner 0,3 Sekunden vorzugsweise kleiner 0,1 Sekunden komplett zu öffnen oder zu schließen.

Eine schnelle Reaktion des Proportionalventils ermöglicht eine gleichmäßige Befeuchtung der Materialbahn, da kurze Änderungen in der Auftragsmenge sich auch später im Papier noch ausgleichen können, wenn hier nur geringere Unterschiede auszugleichen sind.

Weiterhin vorteilhaft ist eine Befeuchtungsvorrichtung nach einem der Ansprüche, wobei der elektromagnetische Kraftgeber geeignet ist das Proportionalventil auf jeden Zielwert in einer Zeit kleiner 0,3 Sekunden vorzugsweise kleiner 0,1 Sekunden einzustellen.

Auch bei Veränderungen der Produktionsbedingungen ist es wichtig, dass die Befeuchtungseinheit schnell reagieren kann, um lokale Unterschiede in der Feuchte schnell ausgleichen zu können. Eine entsprechende Feuchteregelung auf Basis einer gemessenen Endfeuchte kann hier auch durch eine schnelle Antwort des Ventils zur Verbesserung der Papier-Qualität und -Feuchte beitragen.

Weiterhin vorteilhaft ist eine Befeuchtungsvorrichtung ist eine Befeuchtungsvorrichtung nach einem der vorherigen Ansprüche, wobei dem Proportionalventil direkt die Düse oder die Auftragsöffnung folgt, und keine weiteren Funktionselemente, insbesondere zur Pulsationsdämpfung verwendet werden.

Eine vorteilhafte Ausführung der Erfindung ist gegeben, wenn auf die teuren und störanfälligen Pulsationsdämpfer verzichtet werden kann, die im Stand der Technik nach Pulsationsventilen oder getakteten Ventilen zum Einsatz kommen.

Ein Funktionselement ist hierbei beispielsweise ein Pulsationsdämpfer der mit einem Elastomer, Federelement oder mit einem kompressiblen Gas einen Druckausgleich herbeiführt. Rohrleitungen und (manuelle) Absperrventile, die Beispielsweise für Wartungsarbeiten verwendet werden, sind dabei keine Funktionselemente im Sinne der Erfindung.

Weiterhin vorteilhaft ist eine Befeuchtungsvorrichtung nach einem der Ansprüche, wobei der Rückstellkraftgeber in dem Proportionalventil ein mechanisches Federelement, einen magnetischen oder elektromagnetischen Kraftgeber oder ein pneumatischen Kraftgeber aufweisen kann.

Ein Federelement kann dabei jede Art einer mechanischen Feder sein, wie Beispielsweise eine Metallfeder, eine Federscheibe oder ein Elastomer oder ähnliches Material, dass durch seine Materialeigenschaften eine Federkraft ausüben kann.

Weiterhin vorteilhaft ist ein Verfahren zur Regelung und/oder Steuerung mindestens einer Befeuchtungsvorrichtung nach einem der Ansprüche zur Befeuchtung einer Materialbahn, insbesondere einer Papier-, Karton- oder Faserstoffbahn, wobei die Befeuchtungsvorrichtung einen Reinigungszyklus durchführen kann, bei dem das Proportionalventil um den eingestellten Zielwert pulsiert, wobei die Abweichung von dem eingestellten Zielwert mittels einer Taktung so erfolgt, dass eine positive und/oder eine negative Abweichung erfolgt. Wobei die Abweichung vorteilhaft zumindest ähnlich lang, vorzugsweise gleich lang sind.

Ziel des Verfahrens ist es, die Menge an Auftragsmedium sofern möglich über das zeitliche Mittel konstant auf dem Zielwert zu halten. Das Pulsieren ist dabei als kurze Bewegung des Ventilkörpers auf der Regelstrecke zu verstehen, die erst positiv dann negativ vom Zielwert abweicht bzw. erst negativ dann positiv.

Sollte der Zielwert ein komplett, oder weitgehend geöffnetes Ventil sein (~ 100 %), kann der Reinigungszyklus nur durch eine teilweise kurze Schließung durchgeführt werden, ein kurzfristiges leichtes Absinken der Menge an Auftragsmedium über die Zeit lässt sich dann nicht vermeiden, ist jedoch ebenfalls Teil der Erfindung.

Dies gilt auch, sollte die Ventilstellung komplett geschlossen sein (~ 0 %). Auch hier kann der Reinigungszyklus nur durch eine kurze Öffnung des Ventils durchgeführt werden, was ein kurzfristiges leichtes Ansteigen der Menge an Auftragsmedium zur Folge hat. In diesen beiden Fällen (geschlossen oder geöffnet) ist das Pulsieren daher als kurze Abweichung in nur eine Richtung vom Zielwert zu verstehen.

Weiterhin vorteilhaft ist Verfahren nach einem Anspruch, wobei die Befeuchtungsvorrichtung ein Proportionalventil enthält, dass um den eingestellten Zielwert pulsierend schnell zumindest teilweise geöffnet oder geschlossen werden kann, wobei die Abweichung von dem eingestellten Zielwert kürzer als 0,3 Sekunden vorzugsweise kürzer als 0,1 Sekunden dauert und das Pulsieren wiederholt werden kann.

Weiterhin vorteilhaft ist ein Verfahren nach einem Anspruch, mit mindestens zwei, vorzugsweise mehr als drei Befeuchtungsvorrichtungen, wobei eine Befeuchtungsvorrichtung, die in einem Reinigungszyklus pulsiert neben mindestens einer anderen Befeuchtungsvorrichtung angeordnet ist, die eine entgegengesetzte Pulsation ausführen kann.

Eine Befeuchtungsvorrichtung hat in dieser Ausführung eine Vielzahl von Auftragsdüsen, die über die Breite der Papierbahn angeordnet sind. Um Unterschiede bei der Befeuchtung über die die Breite der Papierbahn auszugleichen. Der Reinigungszyklus wird hier dann nicht bei allen Befeuchtungsvorrichtungen gleichzeitig durchgeführt, sondern nur bei einzelnen, wobei die jeweils benachbarten Düsen entgegengesetzt pulsieren können. Da jede Auftragsdüse bringt mit einem Sprühkegel Feuchte auf die Materialbahn, und die Sprühkegel sind üblicherweise so angeordnet sind, dass eine Überschneidung der Benachbarten Düsen erfolgt und so eine gleichmäßige Befeuchtung ermöglicht wird. Kurzfristige Unterschiede bei der Befeuchtung der Materialbahn können so effektiv durch benachbarte Düsen ausgeglichen werden.

Weiterhin vorteilhaft ist ein Verfahren nach einem der Ansprüche mit mindestens zwei, vorzugsweise mehr als drei Befeuchtungsvorrichtungen nach einem den Ansprüchen, wobei die entgegengesetzte Pulsation nur die Hälfte der Amplitude oder der Zeitlichen Dauer der Abweichung zum eingestellten Zielwert aufweisen kann.

Der Reinigungszyklus kann so an einzelnen Düsen aus der Vielzahl der Düsen, die über die Bahnbreite angeordnet sind, ausgeführt werden. Ziel der entgegensetzten Pulsation der benachbarten Befeuchtungsvorrichtungen mit halber Amplitude ist auch hier eine gleichmäßige Befeuchtung der Materialbahn. So kann ein Ausgleich der Befeuchtungsvorrichtung im Reinigungszyklus durch die benachbarten Befeuchtungsvorrichtungen erreicht werden.

Weiterhin vorteilhaft ist ein Verfahren wobei der Reinigungszyklus und/oder die Pulsation nur in eine Richtung vom Zielwert abweicht, wobei so auch bei vollständig geschlossenem oder vollständig geöffnetem Ventil der Reinigungszyklus (12) und/oder die Pulsation begonnen werden können.

Um einen Reinigungszyklus und/oder eine Pulsation auch bei einem geschlossenen Ventil der Befeuchtungsvorrichtung durchzuführen, ist es notwendig, dass diese kurz geöffnet wird. Hier ist kein Schwingen um den Zielwert möglich, sondern nur eine Pulsation in den geöffneten Zustand vorgesehen. Ähnlich kann auch bei einem vollständig geöffneten Ventil nur eine Pulsation in einen zumindest teilweise geschlossenen Zustand erfolgen.

Weiterhin vorteilhaft ist ein Verfahren nach einem der Ansprüche, wobei das Pulsieren oder der Reinigungszyklus vorzugsweise zu einer Zeit ausgeführt wird, in der eine Materialbahn mit verminderter Qualität hergestellt wird, oder eine Maschine zur Herstellung dieser Materialbahn in einem besonderen Betriebszustand ist.

Die Zeitliche Frequenz in der Reinigungszyklus und Pulsieren notwendig sind, um ein Festsetzen der Ventilkörper zu vermeiden kann stark variieren, da verschiedene Einflussfaktoren zum Festsetzen führen können, Beispielsweise:
- Wasserqualität, insbesondere gelöste und ungelöste Feststoffe und Verunreinigungen.
- Durchflussmengen und die damit bedingte Düsengeometrie und Ventilgeometrie (größere Ventile und Düsen neigen in der Praxis weniger zum Festsetzen)
- Thermische Veränderungen bei der Befeuchtungsvorrichtung und Auftragsmedium

Dementsprechend kann es je nach Ausführungsform dieser Erfindung notwendig sein, dass der Ventilkörper konstant oder nahezu konstant durch Pulsation oder Reinigungszyklus in Bewegung ist, oder in einer anderen Ausführungsform nur wenige Male pro Tag bewegt wird. In dieser Ausführungsform ist es Vorteilhaft die Pulsation oder den Reinigungszyklus beispielsweise während einem Abriss, Sortenwechsel, Reinigungsstillstand oder bei dem Anfahren nach einem Stillstand durchzuführen, da so keine Feuchteunterschiede in die verkaufsfähige Materialbahn gelangen.

Weiterhin vorteilhaft ist die Verwendung von zumindest zwei Befeuchtungsvorrichtungen wobei über die Breite der Materialbahn eine Vielzahl von Befeuchtungsvorrichtungen angeordnet sind, geeignet verschiedene Zonen unterschiedlich zu befeuchten. Diese Anordnung ist in der Papierindustrie auch als Düsenfeuchter bekannt. Über die Vielzahl der Befeuchtungseinrichtungen kann das Querprofil der Papierbahn in der Feuchte geregelt werden. Üblicherweise können hier 20 bis 200 Befeuchtungsvorrichtungen über Materialbahn angeordnet werden. So kann eine Zonenbreite von 5 cm bis 50 cm erreicht werden, besonders vorteilhaft ist eine Zonenbreite für eine einzelne Befeuchtungsvorrichtungen von 5 cm bis 20 cm.

Anhand von Ausführungsbeispielen werden weitere vorteilhafte Ausprägungen der Erfindung unter Bezugnahme auf die Zeichnungen erläutert. Die genannten Merkmale können nicht nur in der dargestellten Kombination vorteilhaft umgesetzt werden, sondern auch einzeln untereinander kombiniert werden. Die Figuren zeigen im Einzelnen:
- Figur 1: eine schematische Teildarstellung einer möglichen Ausführungsform einer Befeuchtungsvorrichtung zur Befeuchtung einer Materialbahn in einer Schnittdarstellung
- Figur 2: eine schematische Kennlinie zur Erläuterung des Regelbereichs für die Auftragsmenge im Verfahren nach einem Anspruch der Erfindung
- Figur 3: eine schematische Teildarstellung einer möglichen Ausführungsform eines Verfahrens und einer Vorrichtung der Erfindung

Nachfolgend werden die Figuren detaillierter beschrieben.

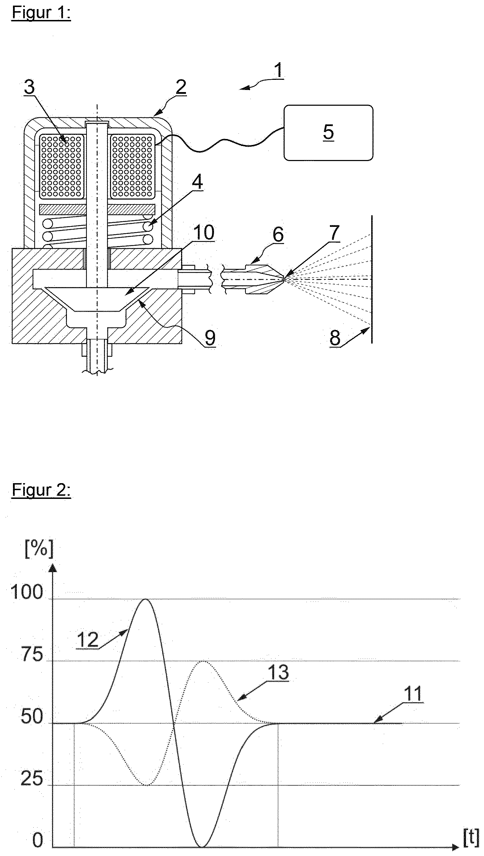

**Figur 1** zeigt eine schematische Teildarstellung einer möglichen Ausführungsform einer Befeuchtungsvorrichtung 1. Die Befeuchtungsvorrichtung 1 umfasst ein Proportionalventil 2 mit einem elektromagnetischer Kraftgeber 3 und einem Rückstellkraftgeber 4, die in der Lage sind einen Ventilkörper 10 in einem Regelbereich 9 zu bewegen. Der Ventilkörper wird auf den Zielwert hin von der Steuerungseinheit 5 gesteuert oder geregelt. Der geregelte Volumenstrom des Auftragsmediums wird dann mit einer Auftragsdüse 6 oder Auftragsöffnung 7 auf eine Materialbahn 8 aufgesprüht. Wobei die Auftragsdüse hier eine Düsenform mit einem verjüngenden Querschnitt aufweist. Die austretende Flüssigkeit wird aufgrund der hohen Scherkräfte an der Auftragsöffnung 7 in kleine Tropfen zerstäubt, die eine gleichmäßige Befeuchtung der Materialbahn 8 ermögliche.

**Figur 2** zeigt eine schematische Kennlinie zur Erläuterung des Regelbereichs für die Auftragsmenge im Verfahren nach einem Anspruch der Erfindung. Der Regelbereich ist auf der vertikalen Achse als Prozentwert der Ventilöffnung oder Auftragsmenge dargestellt. Die Horizontale Achse bezieht sich auf die Zeit [t]. Eine Pulsationsbewegung wird mit einem Reinigungszyklus 12 dargestellt. Die entgegengesetzte Pulsation 13 zeigt die umgekehrt proportionale Öffnung der benachbarten Ventile aus einem Anspruch der Erfindung, die in diesem Anwendungsbeispiel je nur die um die Hälfte der Amplitude des Reinigungszyklus 12 vom Zielwert 11 abweichen. Der Zielwert 11 ist in diesem Beispiel mit 50 % der möglichen Ventilöffnung oder Auftragsmenge dargestellt.

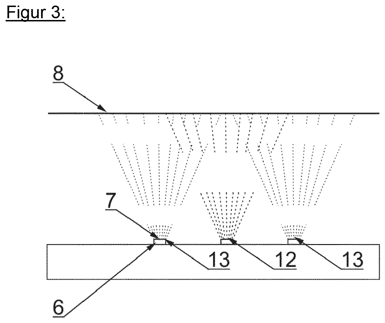

**Figur 3** zeigt eine schematische Teildarstellung in einer Aufsicht einer möglichen Ausführungsform eines Verfahrens der Erfindung. Gezeigt werden mehrere Auftragsdüsen 6 mit entsprechenden Auftragsöffnungen 7 die nebeneinander über die Breite der Materialbahn 8 angeordnet sind. Das aufgesprühte Auftragsmedium wird schematisch durch gepunktete Linien dargestellt. Die Mittlere durchläuft dabei gerade einen Reinigungszyklus 12, während die beiden benachbarten Düsen eine entgegengesetzte Pulsation 13 ausführen. So wird im Mittel die Materialbahn 8 weitgehend konstant befeuchtet. Wenn Reinigungszyklus 12 und entgegengesetzte Pulsationen 13 entsprechend schnell durchgeführt werden, kann sich die Feuchte im Papier einfacher lokal ausgleichen, und die Qualität der Befeuchtung bleibt entsprechend akzeptabel. In der Darstellung verläuft die Materialbahn 8 senkrecht zu der Darstellung entlang einer nicht dargestellten der Z-Achse. Die Auftragsdüsen 6 sind dabei jeweils Teil einer Befeuchtungsvorrichtung 1, die ein nicht dargestelltes Proportionalventil 2 umfasst. In dem dargestellten Verfahren wird der Reinigungszyklus 12 von einer Befeuchtungsvorrichtung 1 ausgeführt, wobei die Benachbarten Befeuchtungsvorrichtungen 1 eine entgegengesetzte Pulsation 13 ausführen.

### Bezugszeichenliste

- 1: Befeuchtungsvorrichtung
- 2: Proportionalventil
- 3: elektromagnetischer Kraftgeber
- 4: Rückstellkraftgeber
- 5: Steuerungseinheit
- 6: Auftragsdüse
- 7: Auftragsöffnung
- 8: Materialbahn
- 9: Regelbereich
- 10: Ventilkörper
- 11: Zielwert
- 12: Reinigungszyklus
- 13: Entgegengesetzte Pulsation

## Patentansprüche

1. Verfahren zur Regelung und/oder Steuerung mindestens einer Befeuchtungsvorrichtung (1), umfassend ein Ventil (2) mit mindestens einem elektromagnetischen Kraftgeber (3) sowie einem Rückstellkraftgeber (4), einen Ventilkörper (10), eine Steuerungseinheit (5), sowie eine Auftragsdüse (6), geeignet zur Befeuchtung einer Materialbahn (8), insbesondere einer Papier- Karton- oder Faserstoffbahn,
**dadurch gekennzeichnet, dass**
die Befeuchtungsvorrichtung (1) einen Reinigungszyklus (12) durchführen kann, wobei das Ventil (2) als Proportionalventil (2) ausgeführt ist, wobei das Proportionalventil (2) um einen eingestellten Zielwert (11) pulsiert, wobei die Abweichung von dem eingestellten Zielwert (11) mittels einer Taktung so erfolgt, dass eine positive und/oder eine negative Abweichung zu dem Zielwert (11) erfolgt.

2. Verfahren nach Anspruch 1, **dadurch gekennzeichnet, dass** das Proportionalventil (2) um den eingestellten Zielwert (11) pulsierend schnell zumindest teilweise geöffnet und/oder geschlossen werden, wobei die Abweichung von dem eingestellten Zielwert kürzer als 0,3 Sekunden vorzugsweise kürzer als 0,1 Sekunden dauert und das Pulsieren wiederholt werden kann.

3. Verfahren nach Anspruch 1 oder Anspruch 2, **dadurch gekennzeichnet, dass** für das Verfahren mindestens zwei, vorzugsweise mehr als drei Befeuchtungsvorrichtungen (1) gesteuert und/oder geregelt werden, wobei eine Befeuchtungsvorrichtung (1), die in einem Reinigungszyklus (12) pulsiert, neben mindestens einer anderen Befeuchtungsvorrichtung (1) angeordnet ist, die eine entgegengesetzte Pulsation (13) ausführt.

4. Verfahren nach Anspruch 3, **dadurch gekennzeichnet, dass** die entgegengesetzte Pulsation (13) nur die Hälfte der Amplitude oder die Hälfte der zeitlichen Dauer der Abweichung zum eingestellten Zielwert (11) aufweist.

5. Verfahren nach einem der vorherigen Ansprüche,
**dadurch gekennzeichnet, dass**
der Reinigungszyklus (12) und/oder die Pulsation vorzugsweise zu einer Zeit ausgeführt wird, in der eine Materialbahn mit verminderter Qualität hergestellt wird, oder eine Maschine zur Herstellung dieser Materialbahn in einem besonderen Betriebszustand ist.

6. Verfahren nach einem der vorherigen Ansprüche, **dadurch gekennzeichnet, dass** der Reinigungszyklus (12) und/oder die Pulsation nur in eine Richtung vom Zielwert (11) abweicht, wobei so auch bei vollständig geschlossenem oder vollständig geöffnetem Ventil (2) der Reinigungszyklus (12) und/oder die Pulsation begonnen werden können.

7. Befeuchtungsvorrichtung (1) umfassend ein Ventil (2) mit mindestens einem elektromagnetischen Kraftgeber (3) sowie einem Rückstellkraftgeber (4), einen Ventilkörper (10) und eine Steuerungseinheit (5), sowie eine Auftragsdüse (6) oder Auftragsöffnung (7), geeignet zur Befeuchtung einer Materialbahn (8) wobei das Ventil ein Proportionalventil (2) ist und einen Regelbereich (9) aufweist, der in mindestens 16 Schritten, vorzugsweise mindestens 100 Schritten auf einen Zielwert (10) eingestellt werden kann, **dadurch gekennzeichnet, dass** die Befeuchtungsvorrichtung (1) geeignet ist mittels der Steuereinheit (5) einen Reinigungszyklus (12) und/oder eine Pulsation, wie sie sich aus einem Verfahren gemäß einem der Ansprüche 1 bis 6 ergeben, auszuführen.

8. Befeuchtungsvorrichtung (1) nach Anspruch 7,
**dadurch gekennzeichnet, dass**
das Proportionalventil (2) einen Ventilkörper (10) aufweist, wobei der Ventilkörper von geschlossen bis offen einen Weg von weniger als 5 mm durchläuft, vorzugsweise weniger als 2 mm.

9. Befeuchtungsvorrichtung (1) nach Anspruch 7 oder Anspruch 8,
**dadurch gekennzeichnet, dass** der oder die elektromagnetischen Kraftgeber (3) geeignet ist das Proportionalventil (2) aus jedem Zielwert (11) in einer Zeit kleiner 0,3 Sekunden vorzugsweise kleiner 0,1 Sekunden komplett zu öffnen oder zu schließen.

10. Befeuchtungsvorrichtung nach einem der vorherigen Ansprüche 7 bis 9, **dadurch gekennzeichnet, dass**
der elektromagnetische Kraftgeber (3) geeignet ist das Proportionalventil (2) auf jeden Zielwert (11) in einer Zeit kleiner 0,3 Sekunden vorzugsweise kleiner 0,1 Sekunden einzustellen.

11. Befeuchtungsvorrichtung (1) nach einem der vorherigen Ansprüche 7 bis 10, **dadurch gekennzeichnet, dass**
dem Proportionalventil (2) direkt die Düse (6) oder die Auftragsöffnung (7) folgt, und keine weiteren Funktionselemente, insbesondere zur Pulsationsdämpfung verwendet werden.

12. Befeuchtungsvorrichtung (1) nach einem der vorherigen Ansprüche 7 bis 11, **dadurch gekennzeichnet, dass**
der Rückstellkraftgeber in dem Proportionalventil ein mechanisches Federelement, einen magnetischen oder elektromagnetischen Kraftgeber oder einen er pneumatischen Kraftgeber aufweisen kann.

13. Verwendung von zumindest zwei Befeuchtungsvorrichtungen (1) nach einem der vorherigen Ansprüche 7 bis 12 in einem Verfahren nach Anspruch 1 bis 6, **dadurch gekennzeichnet, dass** über die Breite der Materialbahn (8) eine Vielzahl von Befeuchtungsvorrichtungen (1) angeordnet sind, geeignet verschiedene Zonen unterschiedlich zu befeuchten.

## Claims

1. Method for the closed-loop control and/or open-loop control of at least one dampening device (1), comprising a valve (2) having at least one electromagnetic force transmitter (3) and a return force transmitter (4), a valve body (10), a control unit (5) and an applicator nozzle (6), suitable for dampening a material web (8), in particular a paper, card or fibrous web,
**characterized in that**
the dampening device (1) can perform a cleaning cycle (12), wherein the valve (2) is designed as a proportional valve (2), wherein the proportional valve (2) is pulsed around a set target value (11), wherein the deviation from the set target value (11) takes place by means of clocking such that there is a positive and/or negative deviation from the target value (11).

2. Method according to Claim 1, **characterized in that** the proportional valve (2) is rapidly at least partially opened and/or closed in a manner pulsing around the set target value (11), wherein the deviation from the set target value lasts for less than 0.3 seconds, preferably less than 0.1 seconds, and the pulsing can be repeated.

3. Method according to Claim 1 or Claim 2, **characterized in that**, for the method, at least two, preferably more than three, dampening devices (1) are subjected to open-loop control and/or closed-loop control, wherein one dampening device (1), which pulses in a cleaning cycle (12), is arranged next to at least one other dampening device (1) which executes opposite pulsation (13).

4. Method according to Claim 3, **characterized in that** the opposite pulsation (13) has only half the amplitude or half the duration of the deviation from the set target value (11).

5. Method according to any of the preceding claims, **characterized in that** the cleaning cycle (12) and/or the pulsation is preferably executed at a time in which a material web of reduced quality is produced or a machine for producing this material web is in a particular operating state.

6. Method according to any of the preceding claims, **characterized in that** the cleaning cycle (12) and/or the pulsation deviates from the target value (11) only in one direction, wherein in this way the cleaning cycle (12) and/or the pulsation can be started even when the valve (2) is completely closed or completely open.

7. Dampening device (1), comprising a valve (2) having at least one electromagnetic force transmitter (3) and a return force transmitter (4), a valve body (10) and a control unit (5), and an applicator nozzle (6) or application opening (7), suitable for dampening a material web (8), wherein the valve is a proportional valve (2) and has a control region (9) which can be set to a target value (10) in at least 16 steps, preferably at least 100 steps, **characterized in that** the dampening device (1) is suitable for executing a cleaning cycle (12) and/or a pulsation by means of the control unit (5), as result from a method according to any of Claims 1 to 6.

8. Dampening device (1) according to Claim 7, **characterized in that** the proportional valve (2) has a valve body (10), wherein the valve body covers a distance of less than 5 mm, preferably less than 2 mm, when moving from closed to open.

9. Dampening device (1) according to Claim 7 or Claim 8, **characterized in that** the electromagnetic force transmitter or transmitters (3) is/are suitable for completely opening or closing the proportional valve (2) from each target value (11) in a time of less than 0.3 seconds, preferably less than 0.1 seconds.

10. Dampening device according to any of the preceding Claims 7 to 9, **characterized in that** the electromagnetic force transmitter (3) is suitable for setting the proportional valve (2) to any target value (11) in a time of less than 0.3 seconds, preferably less than 0.1 seconds.

11. Dampening device (1) according to any of the preceding Claims 7 to 10, **characterized in that** the proportional valve (2) is directly followed by the nozzle (6) or the application opening (7), and no further functional elements are used, in particular for pulsation damping.

12. Dampening device (1) according to any of the preceding Claims 7 to 11, **characterized in that** the return force transmitter in the proportional valve may have a mechanical spring element, a magnetic or electromagnetic force transmitter or a pneumatic force transmitter.

13. Use of at least two dampening devices (1) according to any of the preceding Claims 7 to 12 in a method according to Claims 1 to 6, **characterized in that** a large number of dampening devices (1), suitable for dampening different zones differently, are arranged over the width of the material web (8).

## Revendications

1. Procédé permettant de réguler et/ou de commander au moins un dispositif d'humidification (1), comprenant une vanne (2) pourvue d'au moins un transducteur de force électromagnétique (3) ainsi que d'un transducteur de force de rappel (4), un corps de vanne (10), une unité de commande (5), ainsi qu'une buse d'application (6) adaptée pour humidifier une bande de matière (8), en particulier une bande de papier/carton ou de matière fibreuse,
**caractérisé en ce que** le dispositif d'humidification (1) peut effectuer un cycle de nettoyage (12), dans lequel la vanne (2) est réalisée sous forme de vanne proportionnelle (2), dans lequel la vanne proportionnelle (2) est pulsée autour d'une valeur cible (11) réglée, dans lequel l'écart par rapport à la valeur cible (11) réglée est effectué au moyen d'un cadencement de telle sorte qu'un écart positif et/ou un écart négatif par rapport à la valeur cible (11) est effectué.

2. Procédé selon la revendication 1, **caractérisé en ce qu'**en pulsant autour de la valeur cible (11) réglée, la vanne proportionnelle (2) peut être rapidement ouverte et/ou fermée au moins partiellement, dans lequel l'écart par rapport à la valeur cible réglée dure moins de 0,3 seconde, de préférence moins de 0,1 seconde et la pulsation peut être répétée.

3. Procédé selon la revendication 1 ou la revendication 2, **caractérisé en ce que** pour le procédé, au moins deux, de préférence plus de trois, dispositifs d'humidification (1) peuvent être commandés et/ou régulés, dans lequel le dispositif d'humidification (1) qui est pulsé dans un cycle de nettoyage (12) est disposé à côté d'au moins un autre dispositif d'humidification (1) qui effectue une pulsation opposée (13) .

4. Procédé selon la revendication 3, **caractérisé en ce que** la pulsation opposée (13) ne présente que la moitié de l'amplitude ou la moitié de la durée dans le temps de l'écart par rapport à la valeur cible (11) réglée.

5. Procédé selon l'une quelconque des revendications précédentes, **caractérisé en ce que** le cycle de nettoyage (12) et/ou la pulsation sont effectués de préférence à un moment où une bande de matière de qualité inférieure est fabriquée, ou une machine de fabrication de cette bande de matière se trouve dans un état de fonctionnement particulier.

6. Procédé selon l'une quelconque des revendications précédentes, **caractérisé en ce que** le cycle de nettoyage (12) et/ou la pulsation ne dévie que dans un sens par rapport à la valeur cible (11), dans lequel même avec une vanne (2) entièrement fermée ou entièrement ouverte, le cycle de nettoyage (12) et/ou la pulsation peuvent alors commencer.

7. Dispositif d'humidification (1), comprenant une vanne (2) pourvue d'au moins un transducteur de force électromagnétique (3) ainsi que d'un transducteur de force de rappel (4), un corps de vanne (10), une unité de commande (5), ainsi qu'une buse d'application (6) ou d'un orifice d'application (7) adapté(e) pour humidifier une bande de matière (8), dans lequel la vanne est une vanne proportionnelle (2) et présente une plage de régulation (9) qui peut être réglé en au moins 16 incréments, de préférence au moins 100 incréments sur une valeur cible (10), **caractérisé en ce que** le dispositif d'humidification (1) est adapté pour effectuer au moyen de l'unité de commande (5) un cycle de nettoyage (12) et/ou une pulsation comme ils résultent d'un procédé selon l'une quelconque des revendications 1 à 6.

8. Dispositif d'humidification (1) selon la revendication 7, **caractérisé en ce que** la vanne proportionnelle (2) présente un corps de vanne (10), dans lequel le corps de vanne parcourt de la position fermée à la position ouverte une course de moins de 5 mm, de préférence moins de 2 mm.

9. Dispositif d'humidification (1) selon la revendication 7 ou la revendication 8, **caractérisé en ce que** le(s) transducteur(s) électromagnétique(s) (3) est/sont adapté(s) pour ouvrir ou fermer complètement la vanne proportionnelle (2) à partir de chaque valeur cible (11) dans un délai inférieur à 0,3 seconde, de préférence inférieur à 0,1 seconde.

10. Dispositif d'humidification selon l'une quelconque des revendications précédentes 7 à 9, **caractérisé en ce que** le transducteur de force électromagnétique (3) est adapté pour régler la vanne proportionnelle (2) sur chaque valeur cible (11) dans un délai inférieur à 0,3 seconde, de préférence inférieur à 0,1 seconde.

11. Dispositif d'humidification (1) selon l'une quelconque des revendications précédentes 7 à 10, **caractérisé en ce que** la vanne proportionnelle (2) est suivie immédiatement de la buse (6) ou de l'orifice d'application (7) et qu'aucun autre élément fonctionnel n'est utilisé, en particulier pour l'amortissement de la pulsation.

12. Dispositif d'humidification (1) selon l'une quelconque des revendications précédentes 7 à 11, **caractérisé en ce que** le transducteur de force de rappel peut présenter dans la vanne proportionnelle un élément de ressort mécanique, un transducteur de force magnétique ou électromagnétique ou un transducteur de force pneumatique.

13. Utilisation d'au moins deux dispositifs d'humidification (1) selon l'une quelconque des revendications précédentes 7 à 12 dans un procédé selon les revendications 1 à 6, **caractérisée en ce que** sur la largeur de la bande de matière (8), une pluralité de dispositifs d'humidification (1) est disposée qui est adaptée pour humidifier différentes zones de manière différente.
